# EUROPEAN PATENT SPECIFICATION

(11) **EP 0 764 128 B1**
(45) Date of publication and mention of the grant of the patent: **16.09.1998**
(21) Application number: 95941534.0
(22) Date of filing: 07.06.1995
(51) Int. Cl.: B65G 57/00, B09B 3/00, B03B 9/06

(54) **A MAGAZINE ARRANGEMENT**
EINE MAGAZINANORDNUNG
MAGASIN A CASSETTES

(30) Priority: 14.06.1994 DK 67594
(43) Date of publication of application: 26.03.1997
(73) Proprietor: MASKINFABRIKKEN HOJVANG APS, DK-8355 Solbjerg (DK)
(72) Inventor: ANDERSEN, Anders, DK-8355 Solbjerg (DK)
(74) Representative: Holme, Edvard
(86) International application number: PCT/DK95/00228
(87) International publication number: WO 95/34493

(56) References cited:
- WO-A-89/10319
- NO-A- 32 715

## Description

The invention concerns a magazine arrangement, comprising a number of open, lengthy cassettes having on open front side and a back side and serving for accomodating each a stack of flat objects, such as can lids, and also an apparatus, which has a first path for lengthways carrying the cassettes separately past a charge and/or discharge unit for charging or discharging the cassettes, a second path in front of the first one to accumulate a number of cassettes and to carry these cassettes one at a time crosswise in front of the charge and/or discharge unit in the first path, and a third path, after the charge and/or discharge unit, for carrying one at a time the cassettes which have left the charge and/or discharge unit, crosswise along the first path and accumulate a number of these cassettes after this path.

Norwegian patent No. 32715 discloses an apparatus for automatically charging lengthy cassettes with can lids. This apparatus has a stand with a frame being vertically displaceable up and down in the stand. In this frame there is placed a horizontally displaceable first cassette, with a second cassette being divided in partitions with the same width as a can lid. The lids are manufactured in a press and are successively guided from this press out into one of the said partitions whereby the two cassettes at the same time are being lowered stepwise until this partition is charged with lids. Then the cassettes are elevated while they at the same time are being horizontally displaced in the frame at a distance equal to the width of a lid, whereby a new partition gets into the charging position. The process is repeated until all of the partitions in a cassette have been charged, whereafter the charged cassette can be removed from the right side. A new, empty cassette has in the meantime been placed in the left side of the frame guidance so that the apparatus will function without stopping.

The manipulation with these double cassettes is very difficult and requires utmost attention and almost constant supervision from the operating personnel. The first cassette must be placed with accuracy in the frame guidance in order to make the apparatus function and this operation must take place at the same time as the frame is moving. Another problem is the fact that the cassettes are open in the front and consequently there is a risk for the vertically stocked lids to fall out.

The mechanism in question is furthermore expensive and complicated and is not suitable for following the high production speed existing in modern production plants for manufacturing can lids. The apparatus can, by the way, only be used for charging the cassettes with lids, and the patent specification has no instructions with regard to how they are discharged.

WO patent specification No. 89/10319 discloses a similar apparatus, which however can be used for as well charging as discharging lengthy cassettes for e.g. can lids. Also in this case the cassettes are carried upright, horizontally and vertically through the apparatus. During the vertical passage the cassettes are transported separately by means of two endless belts guiding the cassette in question by engaging its sides. Beside this, the patent specification is practically silent as to how the cassettes then are guided through the plant without tipping over and without the lids falling out of the open front.

If the apparatus is supposed to be able to function with reasonable reliability of operation it must, however, has a sort of a guide for supporting the upright standing cassettes, and thereby the same problems of operation will arise as disclosed from the above-mentioned Norwegian patent. Even if the cassettes are secured from tipping over in this way, the lids will continue to be inclined to fall out of the open front of the cassettes. This tendency is especially a great inconvenience for the personnel having to place the charged cassettes in the guide of the apparatus or to discharge the charged cassettes from this guide, and who during this operation very carefully must see to that all of the lids are correctly in position up against the vertically placed bottom and that no lids fall out of the open front of the cassette.

The object of the invention is to provide a magazine arrangement of the type mentioned in the opening paragraph which has a simple and reliable construction, is handy to operate, requires minimal working effort and supervision of the operating personnel, and which moreover can function with very high rates of production.

This is, according to the invention, achieved in that all three paths in the apparatus are formed in such a way that each of the cassettes during the stay and passage of a path is upright standing with a backwards turned inclination in relation to a vertical plane. Thereby the cassettes are secured from tipping over as they are supported of the path of the apparatus and are holded in abutment against these by the gravitation. The latter also provides for the fact that all of the lids appropriately will abut on the bottom of the cassettes and that none of these will fall out of the open front of the cassettes.

However, if the inclination is exceeding a certain limit there may be a risk that the stack of lids skids, and if it, on the other hand, is too small, there may be a risk to the fact that the lids will not for certain come into position against the bottoms of the cassettes, and some of them might even fall out. The correct stacking and position of the lids in a cassette is best to be obtained if the angle, which each of the cassettes inclines in proportion to a vertical plane is between 5° and 60°, preferably between 10° and 40°, and especially between 20° and 30°.

When the paths of the apparatus are built up in a stand and are situated in inclined planes with the same inclination, since the second and third path extends horizontally, each within its own plane, while the first path extends perpendicular to the two other paths, it is furthermore immediately easy for the operating personnel to place cassettes on the horizontal paths and remove them again.

The transportation of the cassettes on the horizontal paths can furthermore advantageously take place by means of smooth belt conveyers allowing the cassettes a relative sliding in relation to the belt conveyers which thereby partly can carry the cassettes to and fro the first path, and partly can allow an accumulation of the cassettes on the horizontal paths.

Also the transportation through the first path can advantageously take place by means of one or more belt conveyers, which in that case must not be smooth, but on the contrary be able to act on a cassette placed on the first path, with an adequate high frictional force in order to overcome the result of the gravitation force.

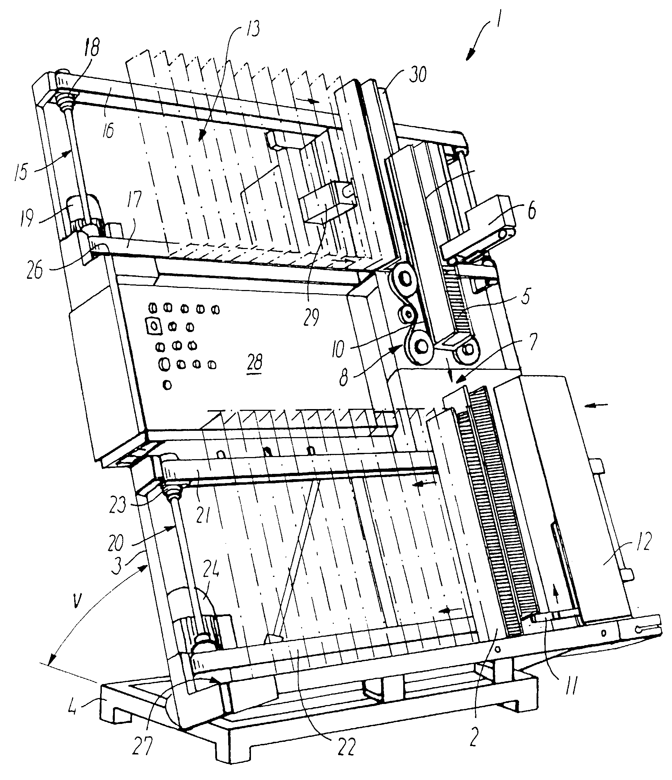

The invention will be explained more fully by the following description of an embodiment, which just serves as an example, with reference to the only figure of the drawing showing a magazine arrangement according to the invention, generally designated by the reference numeral 1.

This arrangement comprises a number of lengthy, open cassettes 2, and an apparatus 3 with a stand 4. The cassettes 2 serves the purpose each to accommodate a stack of flat objects, which in the case shown are supposed to be lids 5 for cans.

A charge and/or discharge unit 6 of the type disclosed as an example in the above-mentioned WO patent specification No. 89/10319 serves the purpose of charging or discharging a cassette 2. For this purpose the apparatus 3 has a first path 7 for lengthways carrying the cassette past the charge and/or discharge unit.

In this path there is in this case placed two belt conveyers 8 with narrow, for instance, wedge shaped belts 9 being squeezed into feed grooves 10 on each side of the cassette. By means of these belt conveyers 8 the cassette 2 can successively be carried past the charge and/or discharge unit currently with the cassette being charged or discharged. A lifting arm 11 on a lifting mechanism 12 is furthermore serving the purpose of lifting the cassette 2 up to engagement with the belt conveyers 8 or lower it so that the belt conveyers can loosen their engagement without free falling of the cassette.

Instead of the above-mentioned two belt conveyers 8 one single underlying belt conveyer, not shown, can be used, having an endless belt with such a coefficient of friction that the cassettes will not slide down the belt acted on by the gravitation. This belt can, for instance, be supplied with traversing driving ribs being able to accommodate the weight composant of the cassettes in the longitudinal direction, but allowing the cassettes to be crosswise displaced on the belt. In this case there will be no need for the lifting mechanism 12 since said underlying belt conveyer is able to support the cassettes in the first path in the full length of this path.

Beside the first path 7 the apparatus has a second path 13 and a third path 14 both of which are extending in horizontal direction, respectively, to and fro the first path 7 in an angle of 90°.

In the second path a belt conveyer 15 is placed having two endless belts 16 and 17 of a smooth material, such as polyester. The belt runs around rolls 18 driven by a motor 19.

In the third path 14 there in the same way is placed a belt conveyer 20 with two endless belts 21 and 22 from a smooth material such as polyester. The belts are running around rolls 23 driven by a motor 24.

Below the second path 13 there is furthermore in this case a ledge 26 with a smooth surface or a belt conveyer, not shown, and below the third path 14 there is a ledge 27 with a smooth surface or a belt conveyer, not shown.

The stand 3 with the three paths 7, 23 and 14 is situated inclined to the rear on the base frame 4 in an angle of inclination v in relation to a vertical plane. The paths 7 and 14 are situated in principle in the same level, while the path 13 is somewhat displaced with a distance of minimum the same size as the height of the cross section of a cassette in proportion to this plane. A pusher 29 serves the purpose of pushing a cassette from the second path 13 up into the level of the other two paths.

The apparatus is controlled by means of a switchboard 28 and functions in the following way, under the presumption that the apparatus is used for charging cassettes which are carried through the apparatus in direction of the arrows, and also under the presumption that an operator has put a number of empty cassettes on the ledge 26 and the belt conveyer 15 of the second path 13.

According to requirement this belt conveyer can in this connection be dimensioned with such a great length that it can accommodate adequately the cassettes in such a way that the operator only with predetermined time intervals will have to place new empty cassettes on the belt conveyer 15. The rest of the time the apparatus can operate on its own without service and supervision, and the manual work being necessary is furthermore limited to a minimum since the former difficult work in carrying cassettes in and out of the guides of the conventional apparatus completely has been eliminated. The cassettes merely have to be placed on a belt conveyer, inclined to the rear, having a lower, smooth ledge or a lower, not shown, belt conveyer for supporting the cassettes, which thereby automatically are placed in correct positions by the belt conveyer 15, and the same conditions take effect in the case of the third path 14. The apparatus according to the invention is consequently very labour-saving.

As it can be seen, there is now a stock of empty cassettes on the belt conveyer 15. The cassettes are carried by the belt conveyer in the direction of the arrows towards the first path 7 where the first cassette in the row will be brought to a halt by a stop 30. The succeeding cassettes will then be packed in front of the first one since all of the cassettes in this process will slide on the belts 16 and 17 which thereby will act as an accumulator for the cassettes.

At the same time a cassette is on its way down through the first path 7 in the direction of the arrow. This cassette is transported stepwise downwards by the belt conveyers 8, while it successively is charged with lids by means of a charge and/or discharge unit 6. When the cassette is released from the belt conveyers 8, it is further lowered downwards until it itself is engaged by the arm 11 of the lifting mechanism, until the lower end of the cassette now charged has been put to rest on to the ledge 27.

When the cassette, which is coming down through the first path 7, has come so far that its upper edge is at the same level as the topside of the ledge 26, the front cassette on the belt conveyer 15 of the second path 13 is shot up by the pusher 29 to the level of the first path 7 and is now standing on the underlying cassette in the path 7 to subsequently follow this cassette downwards until it itself will be engaged by the belt conveyors 8 and starts to be charged with lids by means of the charge and/or discharge unit 6.

The cassettes which have been charged with lids and lowered on to the ledge 28 of the third path 14, is now by the belt conveyer 20 of the third path 14 carried away from the first path 7 in the direction of the arrows, so that there will be room for lowering another filled cassette down on to the ledge 27.

As is the case for the second path 13 there can be accumulated so many cassettes on the third path 14, that the operator only periodically needs to be present to remove the charged cassettes. This operation can very easily take place since the charged cassettes only have to be lifted off the belt, and due to the inclination there is no risk that the lids will fall out during this operation.

The magazine arrangement has above been described under the condition that it is used for charging the cassettes with lids. If it, however, is being used for discharging of cassettes already charged, the process will take place in the reverse order.

The charged cassettes are then placed on the belt conveyer 20 of the lower horizontally extending path which will accumulate a suitable number of charged cassettes and take the first one in the row in front of the charge and/or discharge unit 6 in the first path 7. The lifting arm 11 of the lifting mechanism 12 will elevate the charged cassette up into engagement with the belt conveyers 8 taking the cassette further on past the discharge unit 6, which then successively will empty the cassette for lids.

When this cassette is emptied and its lower end-gable has come into level with the ledge 26 of the upper horizontally extending path the empty cassette will now be lowered by the pusher 29 down into level with the upper path's belt conveyer 15, which then will take this cassette along the first path in order to make room for another empty cassette. The belt conveyer 15 is at the same time serving the purpose of accumulating a suitable number of empty cassettes.

As it can be seen, the magazine arrangement is extremely easy to operate, because the apparatus has not, as is the case with conventional apparatuses of this kind, guides to prevent the upright standing cassettes to tip over. The guides have been superfluous by the inclination of the stand whereby the gravitation is used to hold the cassettes safely in position by abutment against the diagonally lying belt conveyers 13, 14 and the ledges 26, 27.

Another advantage obtained by the inclination of the stand is the fact that there is no risk that the lids will fall out, neither when the cassettes are handled manually nor when they are transported through the paths of the apparatus. On the contrary, the lids themselves will seek down towards the back of the cassette acted on by the gravitation.

It is however, in this connection, a.o. important that the right angle of inclination v is chosen. If this angle is too large the stack of lids in a cassette will be inclined to skid and if it is too small there is a risk that the lids will fall out.

5 In order to safely eliminate this risks the inclination angle v should be between 50° and 60°, preferably between 10° and 40°, and especially between 20° and 30°. At these inclination angles each lid will automatically by the gravitation be forced into a position where its plane is perpendicular to the longitude direction of the cassette and its lower edge is lying up against the bottom of the cassette.

It is to be noticed that in stead of the belt conveyers 15 and 16 in the paths 13 and 14 other kinds of feed mechanisms can be used, e.g. pushers pushing the cassettes along a smooth underlying. The important fact is that this underlying inclines the angle v in relation to a vertical plane.

Furthermore the magazine arrangement has been described above under the condition that it is used for can lids. It is obvious for a person skilled in the art that it just as well can be used for many other objects which reasonably can be stacked.

## Claims

1. A magazine arrangement (1), comprising a number of open, lengthy cassettes (2) having an open front side and a back side and serving for accommodating each a stack of flat objects (5), such as can lids (5), and also an apparatus (3), which has a first path (7) for lengthways carrying the cassettes (2) separately past a charge and/or discharge unit (6) for charging or discharging the cassettes (2), a second path (13) in front of the first one to accumulate a number of cassettes (2) and to carry these cassettes (2) one at a time crosswise in front of the charge and/or discharge unit (6) in the first path (7), and a third path (14), after the charge and/or discharge unit (6), for carrying one at a time the cassettes (2) which have left the charge and/or discharge unit (6), crosswise along the first path (7) and accumulate a number of these cassettes (2) after this path (7), **characterized** in that all three paths in the apparatus are formed in such a way that each of the cassettes during the stay and passage of a path is upright standing with a backwards turned inclination in relation to a vertical plane.

2. A magazine arrangement according to claim 1 **characterized**, in that the inclination of each support in relation to a vertical plane is between 5° and 60° , preferably between 10° and 40° and especially between 20° and 30°.

3. A magazine arrangement according to claim 1 or 2, wherein the supports of the three paths all have the same inclination, and that the second and third supports extends horizontally, each within its own plane, while the first support extends perpendicular to the two other supports.

4. A magazine arrangement according to claim 3, **characterized** in that the second and third supports are belt conveyers (15;20) with one respectively towards and away from the first path (7) extending direction of transportation, respectively.

5. A magazine arrangement according to claim 4, **characterized** in that the belts (16,17;21,22) of each belt conveyers (15;20) is made of a smooth material, e.g. a plastic as polyester.

6. A magazine arrangement according to claim 4, **characterized** in that each belt conveyer (15;20) has two, relatively narrow, endless belts (16,17;21,22) from a smooth material, e.g. a plastic such as polyester, and that these belts are placed in the respective path with a distance between them which is smaller than the length of the cassettes.

7. A magazine arrangement according to anyone of the claims 1-6, **characterized** in that there below as well the second as the third support is a continuos support (26;27) in the direction of the respective path meant for taking up the weight of the cassettes, and that this support can be a belt conveyer or a smooth ledge.

8. A magazine arrangement according to anyone of the claims 1-7, **characterized** in that there in the plane of the first path (7) is placed a belt conveyer (8), which has a transportation direction extending between the second and the third support and that this belt conveyer consists of one or more endless belt (9) of material having such a coefficient of friction that the cassettes (2) will not slide on the belt acted on by the gravitation.

9. A magazine arrangement according to anyone of the claims 1-7, wherein there in the first path (7) are placed two belt conveyers (8) with a distance between equal to the width of a cassette (2), each of the belt conveyers having one from the second to the third support extending transportation direction, that these belt conveyers are lying against either side of a cassette being in the first path (7), and that they have such a coefficient of friction that this cassette will not slide on the belt acted on by the gravitation.

10. A magazine arrangement according to anyone of the claims 1-9, **characterized** in that the three inclined supports of the apparatus are built up upon an inclined stand.

## Patentansprüche

1. Magazinvorrichtung (1) mit einer Anzahl von offenen, länglichen Kassetten (2) mit einer offenen Stirnseite und einer Rückseite zur Aufnahme jeweils eines Stapels flacher Gegenstände (5) wie Dosendeckel (5) sowie mit einer Vorrichtung (3) mit einer ersten Bahn (7), welche die Kassetten (2) getrennt in der Längsrichtung an einer Füll-und/oder Entleereinheit (6) zum Füllen oder Entleeren der Kassetten (2) vorbeiführt, einer zum Sammeln einer Anzahl von Kassetten (2) vorgesehenen, vor der ersten Bahn befindlichen zweiten Bahn (13), welche die Kassetten zeitmässig getrennt kreuzweise vor die Füll- und/oder Entleereinheit (6) in der ersten Bahn (7) führt, sowie mit einer hinter der Füll-und/oder Entleereinheit (6) befindlichen dritten Bahn (14), die einzelne Kassetten (2), welche die Füll- und/oder Entleereinheit (6) verlassen haben, kreuzweise an der ersten Bahn (7) entlang führt und eine Anzahl dieser Kassetten (2) hinter dieser Bahn (7) sammelt, **dadurch gekennzeichnet**, dass alle drei Bahnen der Vorrichtung so ausgebildet sind, dass jede der Kassetten beim Aufenthalt in einer Bahn und bei ihrem Durchgang durch diese mit einer nach hinten gerichteten Neigung im Verhältnis zu einer senkrechten Ebene aufrecht steht.

2. Magazinvorrichtung nach Anspruch 1, **dadurch gekennzeichnet**, dass die Neigung jeder Unterstützung im Verhältnis zu einer senkrechten Ebene zwischen 5 und 60 , vorzugsweise zwischen 10 und 40 und insbesondere zwischen 20 und 30 beträgt.

3. Magazinvorrichtung nach Anspruch 1 oder 2, **dadurch gekennzeichnet**, dass die Stützvorrichtungen frt drei Bahnen alle die gleiche Neigung aufweisen, und dass die zweite und die dritte Stützvorrichtung sich jeweils in ihrer eigenen Ebene waagerecht erstrecken, während sich die erste Stützvorrichtung. rechtwinklig zu den beiden anderen Stützvorrichtungen erstreckt.

4. Magazinvorrichtung nach Anspruch 3, **dadurch gekennzeichnet**, dass die zweite und die dritte Stützvorrichtung Bandförderer (15; 20) sind, und dass die Förderrichtung des einen Bandförderers zur ersten Bahn (7) hin gerichtet ist, während die des anderen Bandförderers von der ersten Bahn (7) weg gerichtet ist.

5. Magazinvorrichtung nach Anspruch 4, **dadurch gekennzeichnet**, dass die Förderbänder (16, 17; 21, 22) der Bandförderer (15; 20) aus einem glatten Material, z.B. einem Kunststoff wie Polyester bestehen.

6. Magazinvorrichtung nach Anspruch 4, **dadurch gekennzeichnet**, dass die Bandförderer (15; 20) jeweils zwei verhältnismässig schmale, endlose Förderbänder (16, 17; 21, 22) aus einem glatten Material, beispielsweise einem Kunststoff wie Polyester aufweisen, und dass diese Förderbänder in gegenseitigem Abstand in der betreffenden Bahn angeordnet sind, der geringer ist als die Kassettenlänge.

7. Magazinvorrichtung nach jedem beliebigen der Ansprüche 1-6, **dadurch gekennzeichnet**, dass unter der zweiten sowie der dritten Stützvorrichtung in Richtung der betreffenden Bahn jeweils eine kontinuierliche Stützvorrichtung (26; 27) zur Aufnahme des Gewichts der Kassetten vorgesehen sind, und dass diese Stützvorrichtung als Bandförderer oder als glatte Rippe ausgebildet ist.

8. Magazinvorrichtung nach jedem beliebigen der Ansprüche 1-7, **dadurch gekennzeichnet**, dass in der Ebenen der ersten Bahn (7) ein Bandförderer (8) angeordnet ist, dessen Förderrichtung sich zwischen der zweiten und der dritten Stützvorrichtung erstreckt, und dass dieser Bandförderer aus einem oder mehreren endlosen Bändern (9) aus einem Material mit einem solchen Reibungskoeffizienten besteht, dass die Kassetten (2) unter der Einwirkung der Schwerkraft nicht auf dem Band gleiten.

9. Magazinvorrichtung nach jedem beliebigen der Ansprüche 1-7, **dadurch gekennzeichnet**, dass in der ersten Bahn (7) zwei Bandförderer (8) in einem der Breite einer Kassette (2) entsprechenden Abstand angeordnet sind, dass sich die Förderrichtung jedes dieser Bandförderer von der zweiten bis zur dritten Stützvorrichtung erstreckt, dass diese Bandförderer an jeweils einer Seite einer sich in der ersten Bahn (7) befindlichen Kassette anliegen und dass sie einen solchen Reibungskoeffizienten aufweisen, dass diese Kassette unter der Einwirkung der Schwerkraft auf dem Band nicht gleitet.

10. Magazinvorrichtung nach jedem beliebigen der Ansprüche 1-9, **dadurch gekennzeichnet**, dass die drei geneigten Stützvorrichtungen auf einem geneigten Gestell aufgebaut sind.

## Revendications

1. Agencement de magasin (1) comprenant un nombre de cassettes allongées et ouvertes (2), ayant une face avant ouverte et une face arrière, et servant à recevoir chaque objet d'une pile d'objets plats (5), tels que des couvercles de boîte (5), et également un appareil (3), qui présente une première voie (7) pour porter longitudinalement les cassettes (2) séparément après une unité (6) de chargement et/ou de déchargement pour charger ou décharger les cassettes (2), une deuxième voie (13) en avant de la première voie pour accumuler un nombre de cassettes (2) et pour porter ces cassettes (2) l'une à la fois transversalement en avant de l'unité (6) de chargement et/ou de déchargement dans la première voie, et une troisième voie (14), après l'unité (6) de chargement et/ou de déchargement, pour porter l'une à la fois les cassettes (2) qui ont quitté l'unité (6) de chargement et/ou de déchargement, transversalement le long de la première voie (7) et accumuler un nombre de ces cassettes (2) après cette voie (7), caractérisé en ce que toutes les trois voies dans l'appareil sont formées de telle manière que chacune des cassettes pendant le séjour et le passage d'une voie sont disposées vers le haut avec une inclinaison dirigée vers l'arrière par rapport à un plan vertical.

2. Agencement de magasin selon la revendication 1, caractérisé en ce que l'inclinaison de chaque support par rapport à un plan vertical est comprise entre 5° et 60°, de préférence entre 10° et 40° et en particulier entre 20° et 30°.

3. Agencement de magasin selon la revendication 1 ou 2, dans lequel les supports des trois voies ont tous la même inclinaison, et en ce que les deuxième et troisième supports s'étendent horizontalement, chacun dans son propre plan, alors que le premier support s'étend orthogonalement aux deux autres supports.

4. Agencement de magasin selon la revendication 3, caractérisé en ce que les deuxième et troisième supports sont des convoyeurs à courroies (15; 20) avec une direction de transport s'étendant respectivement vers et depuis la première voie (7).

5. Agencement de magasin selon la revendication 4, caractérisé en ce que les courroies (16, 17; 21, 22) de chaque convoyeur (15 ; 20) à courroies sont réalisées en un matériau lisse, par exemple une matière plastique comme du polyester.

6. Agencement de magasin selon la revendication 4, caractérisé en ce que chaque convoyeur (15; 20) à courroies comprend deux courroies sans fin (16, 17; 21, 22), relativement étroites, réalisées en un matériau lisse, par exemple une matière plastique telle que du polyester, et en ce que ces courroies sont placées dans la voie respective avec une distance entre elles qui est plus petite que la longueur des cassettes.

7. Agencement de magasin selon l'une quelconque des revendications 1 à 6, caractérisé en ce qu'en dessous du deuxième aussi bien que du troisième support, un support continu (26 ; 27) s'étend dans la direction de la voie respective pour prendre en charge la masse des cassettes, et en ce que ce support peut être un convoyeur à courroies ou un rebord lisse.

8. Agencement de magasin selon l'une quelconque des revendications 1 à 7, caractérisé en ce qu'un convoyeur (8) à courroies est placé dans le plan de la première voie (7), lequel a une direction de transport s'étendant entre les deuxième et troisième supports et en ce que ce convoyeur à courroies comprend une ou plusieurs courroies sans fin (9) réalisées en un matériau ayant un coefficient de friction tel que les cassettes (2) ne coulissent pas sur la courroie sous l'effet de la gravité.

9. Agencement de magasin selon l'une quelconque des revendications 1 à 7, dans lequel deux convoyeurs (8) à courroies sont placés dans la première voie (7) avec une distance entre eux égale à la largeur d'une cassette (2), chacun des convoyeurs à courroies ayant une direction de transport s'étendant depuis le deuxième support vers le troisième support, en ce que ces convoyeurs à courroie reposent contre chaque face d'une cassette dans la première voie (7), et en ce qu'ils ont un coefficient de friction tel que cette cassette ne glisse pas sur la courroie sous l'effet de la gravité.

10. Agencement de magasin selon l'une quelconque des revendications 1 à 9, caractérisé en ce que les trois supports inclinés de l'appareil sont construits sur un lieu incliné.
